# EUROPÄISCHE PATENTSCHRIFT

(11) **EP 2 687 392 B1**
(45) Veröffentlichungstag und Bekanntmachung des Hinweises auf die Patenterteilung: **01.04.2015**
(21) Anmeldenummer: 13175290.9
(22) Anmeldetag: 05.07.2013
(51) Int. Cl.: B60G 21/055, F16F 1/14, B21K 21/16, B21K 1/12, B21D 41/00, B21J 7/18

(54) **Verfahren zur Herstellung eines Rohrstabilisators für ein Kraftfahrzeug**
Method for producing a pipe stabiliser for a motor vehicle
Procédé destiné à la fabrication d'un stabilisateur tubulaire pour un véhicule automobile

(30) Priorität: 17.07.2012 DE 102012106423
(43) Veröffentlichungstag der Anmeldung: 22.01.2014
(73) Patentinhaber: Benteler Automobiltechnik GmbH, 33102 Paderborn (DE)
(72) Erfinder: Janzen, Andreas, 34439 Willebadessen-Peckelsheim (DE); Berheide, Friso, 33378 Rheda-Wiedenbrück (DE)
(74) Vertreter: Ksoll, Peter

(56) Entgegenhaltungen:
- EP-A1- 0 878 334
- EP-A1- 2 357 099
- EP-B1- 1 814 748
- WO-A1-93/10924
- DE-A1- 10 044 880
- DE-A1- 19 827 191
- DE-A1-102008 047 782
- DE-A1-102010 038 205
- JP-A- S5 973 136
- JP-A- H11 189 022

## Beschreibung

Die vorliegende Erfindung betrifft ein Verfahren zur Herstellung einer Rohrstabilisatorhälfte für ein Kraftfahrzeug gemäß den Merkmalen im Oberbegriff von Patentanspruch 1.

Aus dem Stand der Technik ist es bekannt, Stabilisatoren an Kraftfahrzeugachsen einzusetzen, um die Fahreigenschaften, insbesondere das Wankverhalten des Kraftfahrzeugs, zu optimieren. Durch den Stabilisator werden die Radlasten von linker und rechter Fahrzeugseite durch Kraftübertragung verteilt und ein mit dem Stabilisator zusätzlich gekoppelter Aufbau in seinem Wankverhalten vermindert. Der Stabilisator selber ist insbesondere als Torsionsstabilisator bekannt, der durch Verdrehen eines Rohrabschnitts ein Torsionsmoment aufbaut und von einem Rad auf das andere Rad eine entsprechend auftretende Radlast überträgt.

Der Stabilisator selber steht dabei im Zielkonflikt zwischen Fahrdynamik und Fahrkomfort. Insbesondere bei Geländefahrzeugen oder aber Kleinlasttransportern ist mit hohem Wankverhalten zu rechnen, weshalb ein torsionssteifer Stabilisator eingesetzt werden müsste, was jedoch bei Geradeausfahrt den Fahrkomfort schmälert.

Aus dem Stand der Technik sind hierzu semiaktive oder aber auch aktive Stabilisatoren bekannt, die unter Eingliederung eines Aktuators, beispielsweise eines elektrischen Stellmotors, in ihrem Steifigkeitsverhalten derart einstellbar sind, dass sie beispielsweise bei einer Kurvenfahrt ein hohes Widerstandsmoment gegen Torsion aufweisen und somit nur ein geringes Wankverhalten des Kraftfahrzeugs zulassen, bei Geradeausfahrt jedoch ein nur geringes Widerstandsmoment gegen Torsion aufweisen und somit einen entsprechenden Fahrkomfort sicherstellen.

Ein solcher Kraftfahrzeugstabilisator ist beispielsweise aus der EP 1 814 748 B1 bekannt.

Die an den entsprechenden Aktuator angebundenen Stabilisatorhälften sind beispielsweise als Stabilisatorstäbe oder aber auch Rohstabilisatoren, mithin als hohle Bauteile bekannt.

Die Stabilisatorhälften werden oftmals aufgrund des Packaging innerhalb des Kraftfahrzeugs, insbesondere aufgrund der umliegenden Achskomponenten sowie der kinematischen Kopplung zum Ein- und Ausfedern des Rades mehrfach dreidimensional gebogen, so dass Leitungen, Stoßdämpfer oder andere Bauteile nicht in Kontakt mit der Stabilisatorhälfte beim Ein- und Ausfedern des Rades kommen.

Gleichzeitig gilt es die Stabilisatorhälften kostengünstig zu produzieren und mit einem geringen Eigengewicht herzustellen, um den Anteil der ungefederten Radmassen gering zu halten und somit das fahrdynamische Verhalten des Kraftfahrzeugs auf einem hohen Niveau anzusiedeln. Aus der DE 10 2010 038 205 A1 ist weiterhin ein Herstellungsverfahren für einen Rohrstabilisator bekannt. Ferner ist aus der EP 2 357 099 A1 ein Kraftfahrzeugstabilisator sowie ein Verfahren zu dessen Herstellung bekannt, wobei ein Anbindungsflansch an ein aufgeweitetes Stabilisatorende angeschweißt wird.

Darüber hinaus ist in der DE 100 44 880 A1 ein Herstellungsverfahren von speziell geformten Hohlkörpern aus Metall offenbart, welches auch als Rundkneten bekannt ist, um Rohre herzustellen, welche über ihre Länge einen verschiedenen Querschnitt und/oder Durchmesser aufweisen. Darüber hinaus ist aus der JPS 59-73136 A ein Herstellungsverfahren für einen Kraftfahrzeugstabilisator bekannt, bei dem in einem Anbindungsbereich ein Abschnitt des Stabilisators aufgeweitet wird, so dass dieser mit einem außenseitigen Zahnkranz formschlüssig zum Eingriff kommt.

Die Stabilisatorhälften sind jedoch über den gesamten Betriebszeitraum eines Kraftfahrzeugs, mithin über mehr als zehn Jahren, einer hohen Dauerwechselbeanspruchung aufgrund der Torsion ausgesetzt, weshalb sie gleichsam besonders dauerhaltbar produziert werden müssen. Es gilt daher, die Bauteile möglichst mit einer hohen Dauerhaltbarkeit herzustellen.

Aufgabe der vorliegenden Erfindung ist es daher, ausgehend vom Stand der Technik, ein Verfahren zur Herstellung eines Rohrstabilisators aufzuzeigen, mit dem ein Rohrstabilisator für ein Kraftfahrzeug, insbesondere eine Rohrstabilisatorhälfte für einen semiaktiven oder aktiven Stabilisator für ein Kraftfahrzeug, besonders kostengünstig, effektiv und dauerhaltbar herstellbar ist.

Die zuvor genannte Aufgabe wird erfindungsgemäß mit einem Verfahren zur Herstellung einer Rohrstabilisatorhälfte für ein Kraftfahrzeug gemäß den Merkmalen im Patentanspruch 1 gelöst.

Vorteilhafte Ausführungsvarianten der vorliegenden Erfindung sind Gegenstand der abhängigen Patentansprüche.

Das erfindungsgemäße Verfahren zur Herstellung einer Rohrstabilisatorhälfte für einen aktiven oder semiaktiven Kraftfahrzeugstabilisator, wobei die Rohrstabilisatorhälfte in Längsrichtung mit voneinander verschiedenen Querschnittsgeometrien hergestellt wird, ist dadurch gekennzeichnet, dass ein Rohr mit konstanter Querschnittsgeometrie zumindest abschnittsweise von außen in einer Knetvorrichtung geknetet wird, wobei der Außendurchmesser verringert wird.

Hierzu wird ein Rohr, insbesondere ein metallisches Rohr mit konstanter Querschnittsgeometrie, wobei das Rohr insbesondere eine runde Außenquerschnittsgeometrie aufweist, durch eine Knetvorrichtung, insbesondere eine Rundknetvorrichtung derart verarbeitet, dass der Außendurchmesser verringert wird. Hierbei handelt es sich insbesondere um ein Rundknetverfahren, das ein spanloses Umformverfahren zum Reduzieren des Querschnitts von Stäben, Rohren oder Drähten darstellt.

Die Knetvorrichtung selbst enthält mehrere in einem Winkelabstand voneinander angeordnete Knetwerkzeuge, die in schneller Folge gleichzeitige radiale Oszillationsbewegungen ausführen. Bei jeder nach innen gerichteten Bewegung der Knetwerkzeuge wird ein Teil des umzuformenden Rohrs derart umgeformt, dass der Außendurchmesser verringert wird. Das Rohr wird dabei mit einem Vorschub durch die Knetvorrichtung bewegt, wobei der Vorschub derart pulsierend erfolgt, dass er auf die Oszillationsbewegungen der Knetwerkzeuge abgestimmt ist.

Hierdurch ist es möglich, eine einstückige und werkstoffeinheitliche Rohrstabilisatorhälfte herzustellen, die eine Anschlusshülse oder aber einen Anschlussflansch sowie über ihre Länge voneinander verschiedene Querschnittsgeometrien aufweist und somit an das zu erwartende Belastungsverhalten und hinsichtlich ihres spezifischen Eigengewichts optimiert ist. Der Rundknetvorgang ist dabei im Gegensatz zu einem aus dem Stand der Technik bekannten Aufweitvorgang erfindungsgemäß derart vorteilig, dass beim Aufweiten entstehende Mikrorisse innerhalb des Werkstoffgefüges oder aber an der Außen- oder Innenmantelfläche des zu bearbeitenden Rohres vermieden werden. Durch den Knetvorgang wird der Werkstoff verdichtet, was gerade die Entstehung von Mikrorissen beim Aufweiten vermeidet.

Im Rahmen der Erfindung ist es somit möglich, auch derartige Innenprofilierungen oder aber Außenprofilierungen herzustellen, die einen formschlüssigen Eingriff mit weiteren Bauteilen, beispielsweise eine Verzahnung mit einem Aktuator ermöglichen. Alternativ ist es auch vorstellbar, den Längenabschnitt zumindest abschnittsweise eckig auszubilden, was insbesondere in Bezug auf eine dem Knetvorgang folgende weitere dreidimensionale Umformung der Stabilisatorhälfte je nach herzustellender Geometrie vorteilig sein kann.

Es wird erfindungsgemäß ein Anschlussflansch oder eine Aktuatorhülse einstückig und werkstoffeinheitlich an der Rohrstabilisatorhälfte durch den Knetvorgang angeformt. Hierdurch wird insbesondere ein einstückig und werkstoffeinheitlicher Rohrstabilisator, insbesondere eine Rohrstabilisatorhälfte hergestellt, die gegenüber einer andauernden und auftretenden Biegewechselbeanspruchung eine hohe Lebensdauererwartung besitzt.

Im Falle eines Anschlussflansches wird insbesondere das Ende des zu bearbeitenden Rohres in der Knetvorrichtung entweder zunächst nicht oder nur geringfügig bearbeitet oder aber in seiner Wandstärke erhöht. Der darauf nachfolgende Längenabschnitt des Rohres wird weiterhin bevorzugt in seiner Querschnittsgeometrie verringert, insbesondere in seinem Außendurchmesser verringert, so dass er gegenüber dem ursprünglichen Rohr kleiner ausgeführt ist. Der Anschlussflansch kann während oder nach dem Knetvorgang mit einer Profilierung zur Anbindung an einen Aktuator geformt werden oder der Anschlussflansch an den Aktuator geschweißt wird.

Im Falle einer Aktuatorhülse wird insbesondere ein derartiger Längenabschnitt des Endes des Rohrs nicht oder nur geringfügig durch den Knetvorgang umgeformt, so dass eine Aktuatorhülse bzw. ein hülsenförmiger Körper ausgebildet wird, wobei dann der auf den hülsenförmigen Körper folgende Längenabschnitt des Rohrstabilisators durch den Knetvorgang in seiner Querschnittsgeometrie verringert wird. Im Rahmen der Erfindung ist es hier insbesondere aufgrund des Knetvorgangs möglich innerhalb der Hülse, beispielsweise durch Einbringen einer Innenverzahnung während des Knetvorgangs oder aber in einem Übergangsabschnitt von Hülse zu Rohrstabilisatorhälfte eine Innenverzahnung derart einzubringen, dass ein in die Hülse eingesetzter bzw. eingeschobener Aktuator, beispielsweise in Form eines Elektromotors, formschlüssig mit der Rohrstabilisatorhälfte gekoppelt werden kann.

Weiterhin bevorzugt wird bei dem Knetvorgang die Wandstärke vergrößert. Durch die Reduzierung des Außendurchmessers erfolgt bei im Wesentlichen über die Länge gleichbleibendem Material eine Verschiebung nach innen, wodurch sich die Wandstärke pro Längenabschnitt bei verringerndem Außendurchmesser erhöht. Durch entsprechende Gegenhalter oder aber Umformdorne ist es jedoch auch möglich mit dem erfindungsgemäßen Verfahren die Wandstärke zu reduzieren, wobei hier maßgeblich der Außendurchmesser gleichbleibt oder aber nur geringfügig verringert wird. Durch die zumindest partielle Verringung der Wandstärke ist es möglich als Ausgangsmaterial ein Rohr mit großen Durchmesserverhältnissen zu wählen, das ein hohes Widerstandsmoment gegen Torsionen bei gleichzeitig geringem Wanddurchmesser und durch eine geringe Wandstärke ein geringes Eigengewicht aufweist derart zumindest abschnittsweise zu bearbeiten, dass für einen nachfolgenden Biegevorgang ein leichtes Abbiegen bzw. Umbiegen ermöglicht wird und über die Längenabschnitte, die im Wesentlichen geradlinig verlaufen, durch den großen Ausgangsdurchmesser ein hohes Widerstandsmoment gegen Torsion verbleibt.

Im Rahmen der Erfindung wird weiterhin das Rohr in Axialrichtung durch die Knetvorrichtung mit einem Vorschub geschoben, wobei insbesondere die Vorschubgeschwindigkeit veränderbar ist. Der Vorschub wird dabei insbesondere, wie eingangs erwähnt, pulsierend ausgeführt, kann jedoch im Rahmen der Erfindung auch als konstant gewählte Vorschubgeschwindigkeit oder aber kontinuierlicher Vorschub mit veränderbarer Geschwindigkeit derart eingestellt werden, dass sich in Längsrichtung des zu bearbeitenden Rohres ein jeweils herzustellender Außendurchmesser mit korrespondierender Wandstärke ergibt.

Weiterhin bevorzugt ist es im Rahmen der Erfindung möglich, zumindest den Abschnitt, der geknetet wird, vor dem Knetvorgang zu erwärmen, wobei insbesondere die Erwärmung durch eine der Knetvorrichtung unmittelbar vorgeschaltete Induktionsspule erfolgt. Durch die vorgeschaltete Erwärmung ist es insbesondere wiederum möglich, eine besonders homogene Gefügestruktur innerhalb des Bauteils bereitzustellen, so dass durch die Wärmebehandlung bzw. das Umformen im warmen Zustand, bei lokal hohen Umformgraden, keine Schwächung des Werkstücks erfolgt.

Im Rahmen ist es weiterhin möglich, auch das Knetwerkzeug selber zu erwärmen, wobei dann eine konduktive Wärmeleitung bei Berührung mit dem Werkstück erfolgt. Ferner ist es im Rahmen der Erfindung möglich unmittelbar nach erfolgter Umformung, insbesondere unmittelbar der Knetvorrichtung nachgeschaltet eine Abschreckbrause zu positionieren, die eine Härtung vornimmt oder alternativ eine Erwärmungsvorrichtung dem Knetwerkzeug nachzuschalten, so dass ein zumindest partielles Vergüten nach der Umformung erfolgt.

Im Rahmen der Erfindung ist es mit der Knetvorrichtung weiterhin möglich, den Endabschnitt des Rohrs zunächst in die Knetvorrichtung einzulegen und durch diese hindurchzuführen und den Endabschnitt in seinem Ursprungszustand bzw. Ausgangszustand zu belassen, wobei der eigentliche Knetvorgang, also das Umformen des Rohres, erst in einem mittleren Längenabschnitt des Rohrs erfolgt, also nach Passieren des Endabschnitts durch die Knetvorrichtung. Hierdurch ergibt sich die Möglichkeit im Gegensatz zu einem aus dem Stand der Technik bekannten Aufweiten auch bei dem klassischen Aufweiten nicht zugängliche Längenabschnitte durch ein mechanisches Umformverfahren zu bearbeiten. Aus dem Stand der Technik ist hierzu allenfalls ein Hochdruckumformverfahren bekannt, welches jedoch nur mit erheblichem Produktionskostenaufwand und eingeschränkten Freiheitsgraden ermöglicht wird.

Im Rahmen der Erfindung wird bei dem Herstellungsverfahren weiterhin nach Abschluss zumindest eines ersten Knetumformens der geknetete Rohrstabilisator gegenüber seiner Mittellängsachse weiter umgeformt. Hierunter ist im Rahmen der Erfindung eine dreidimensionale Formgebung, beispielsweise ein Abbiegen oder aber Umbiegen mindestens der Endbereiche, aber auch ein mehrfaches dreidimensionales Biegen des durch die Knetvorrichtung vorbehandelten Rohrstabilisators zu verstehen.

Im Rahmen der Erfindung ist es weiterhin möglich, einen Dorn in das Rohr während des Umformvorgangs einzuführen, wobei der Dorn insbesondere ein Außenprofil besitzt, das sich durch den Knetvorgang in die Rohrinnenmantelfläche einprägt. Insbesondere ist es möglich, hiermit eine Innenverzahnung innerhalb des herzustellenden Rohrstabilisators, bevorzugt der herzustellenden Rohrstabilisatorhälfte auszubilden.

Im Rahmen der Erfindung ist es weiterhin möglich, das Rohr durch den Knetvorgang von einer runden Querschnittsgeometrie im Ausgangszustand zumindest abschnittsweise über die Länge des Rohrs verlaufend mit einer elliptischen, mehreckigen und/oder rechteckigen Querschnittsgeometrie auszubilden. Abhängig ist dies von den zu erwartenden Belastungen und den späteren zur Anordnung der Rohrstabilisatorhälfte zur Verfügung stehenden Bauraum zu wählen.

Im Rahmen der Erfindung ist es weiterhin möglich, durch Einführung eines Dorns in das Rohr und einen Gegenhalterdorn das Rohr derart zu bearbeiten, dass die Wandstärke durch den Knetvorgang zumindest abschnittsweise in Längsrichtung des Rohrs reduziert wird.

Die zuvor genannten Schritte und Ausführungsvarianten des erfindungsgemäßen Verfahrens sind im Rahmen der Erfindung beliebig untereinander kombinierbar mit den damit jeweils einhergehenden Vorteilen.

Weitere Vorteile, Merkmale, Eigenschaften und Aspekte der vorliegenden Erfindung sind Bestandteil der nachfolgenden Beschreibung. Bevorzugte Ausführungsvarianten sind in den schematischen Figuren dargestellt. Diese dienen dem einfachen Verständnis der Erfindung. Es zeigen:
- Figur 1a - d: nach dem erfindungsgemäßen Verfahren hergestellte Enden von Rohrstabilisatorhälften;
- Figur 2: ein erstes mögliches Bearbeitungsverfahren eines Endes eines Rohrstabilisators;
- Figur 3: ein zweites mögliches Bearbeiten eines Endes eines Rohrstabilisators;
- Figur 4: eine weitere alternative Ausführungsvariante zum Bearbeiten eines Endes eines Rohrstabilisators;
- Figur 5: einen möglichen Verfahrensschritt zum Bearbeiten eines mittleren Längenabschnitts eines Rohrstabilisators;
- Figur 6: eine weitere Möglichkeit zum Bearbeiten eines mittleren Längenabschnitts eines Rohrstabilisators und
- Figur 7: eine Möglichkeit zum Bearbeiten eines Rohrstabilisators mit vorgeschalteter Erwärmungsvorrichtung.

In den Figuren werden für gleiche oder ähnliche Bauteile dieselben Bezugszeichen verwendet, auch wenn eine wiederholte Beschreibung aus Vereinfachungsgründen entfällt.

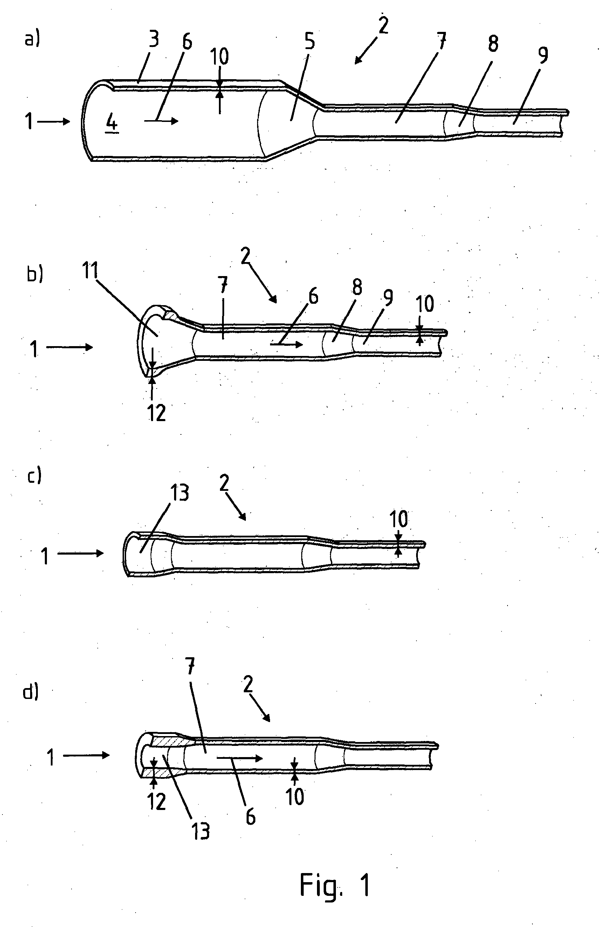

Figur 1a bis d zeigen verschiedene Enden 1 von Rohrstabilisatorhälften 2, die mit dem erfindungsgemäßen Verfahren hergestellt sind.

In Figur 1a ist an dem Ende 1 eine Hülse 3 ausgebildet, wobei die Hülse 3 zur Aufnahme einer nicht näher dargestellten Aktuatorik dient, die in einen Innenraum 4 der Hülse 3 eingeschoben werden kann. Von der Hülse 3 aus erstreckt sich ein im Außendurchmesser verjüngender Übergangsabschnitt 5 in Längsrichtung 6 der Rohrstabilisatorhälfte 2. Auf den Übergangsabschnitt 5 selber folgt wiederum ein Längenabschnitt 7 der Rohrstabilisatorhälfte 2 mit konstantem Außendurchmesser. Auf diesen Längenabschnitt 7 folgt in Längsrichtung 6 der Rohrstabilisatorhälfte 2 wiederum ein zweiter Übergangsabschnitt 8, wiederum gefolgt von einem zweiten Längenabschnitt 9 mit konstantem Außendurchmesser. Allen Längenabschnitten 7 sowie der Hülse 3 ist in der in Figur 1a gezeigten Ausführungsvariante der Rohrstabilisatorhälfte 2 gemein, dass sie die gleiche Wandstärke 10 aufweisen. Der Übergangsabschnitt 5 sowie der Längenabschnitt 7 sind erfindungsgemäß mit dem Rundknetverfahren hergestellt. Die Hülse 3 weist die ursprünglichen geometrischen Abmessungen des Ausgangsrohres auf oder ist in zu vernachlässigender Weise mit dem Rundknetvorgang bearbeitet worden.

Figur 1b zeigt eine zweite Ausführungsvariante einer Rohrstabilisatorhälfte 2, wobei diese einen Anschlussflansch 11 an ihrem Ende 1 aufweist, wobei der Anschlussflansch 11 in Längsrichtung der Rohrstabilisatorhälfte 2 verjüngt ausgebildet ist und gefolgt ist von einem Längenabschnitt 7 mit konstantem Außendurchmesser, wiederum gefolgt von einem zweiten Übergangsabschnitt 8, an dem sich wiederum ein zweiter Längenabschnitt 9 mit konstantem Außendurchmesser angliedert. Die Ausführungsvariante gemäß Figur 1b weist eine im Wesentlichen konstante Wandstärke 10 auf, wobei an ihrem Ende 1, im Bereich des Anschlussflansches 11, diese eine vergrößerte Wandstärke 12 besitzt, wobei die vergrößerte Wandstärke 12 insbesondere zur Anbindung eines weiteren Bauteils, beispielsweise eines Kopplungsglieds eines nicht näher dargestellten Aktuators dient und über die vergrößerte Wandstärke 12 eine thermische Fügung möglich ist.

Figur 1c zeigt eine weitere Ausführungsvariante einer erfindungsgemäß hergestellten Rohrstabilisatorhälfte 2, wobei diese über ihre gesamte Länge im Wesentlichen eine konstante Wandstärke 10 aufweist und analog zu der Ausführungsvariante gemäß Figur 1a aufgebaut ist, mit dem Unterschied, dass an deren Ende 1 keine Hülse, sondern ein Anschlussstutzen 13 ausgebildet ist. Der Anschlussstutzen 13 weist die gleiche Wandstärke 10 der erfindungsgemäß hergestellten Rohrstabilisatorhälfte 2 auf.

In Figur 1d ist eine vierte Ausführungsvariante von einer Rohrstabilisatorhälfte 2 gezeigt, die mit dem erfindungsgemäßen Verfahren hergestellt wurde, wobei diese analog zu Figur 1c ebenfalls einen Anschlussstutzen 13 aufweist, wobei der Anschlussstutzen 13 ebenfalls eine vergrößerte Wandstärke 12 besitzt, gegenüber dem sich in Längsrichtung 6 an den Anschlussstutzen 13 anschließenden Längenabschnitt 7.

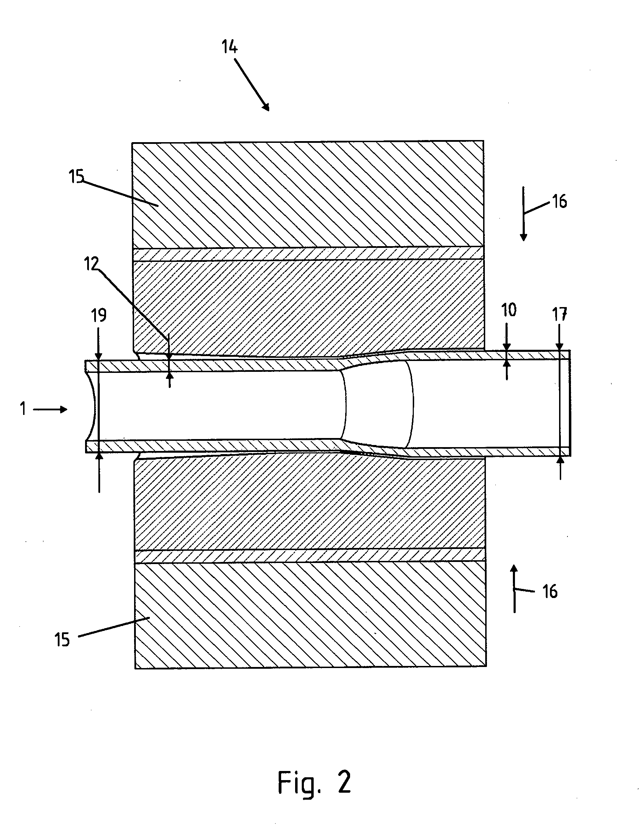

Figur 2 zeigt eine erste Ausführungsvariante des erfindungsgemäßen Herstellungsverfahrens für eine Rohrstabilisatorhälfte 2, wobei in einer Knetvorrichtung 14, aufweisend hier exemplarisch dargestellt zwei Knetwerkzeuge 15, die pulsierend eine Linearbewegung 16 ausführen, wobei die Linearbewegung 16 in eine Mitte gerichtet ist und den ursprünglichen Außendurchmesser 17 des Rohrs verringern zu einem Außendurchmesser 19 nach dem Knetvorgang. Gleichzeitig wird, wie hier dargestellt, die ursprüngliche Wandstärke 10 des Rohrs 18 aufgedickt zu einer vergrößerten Wandstärke 12.

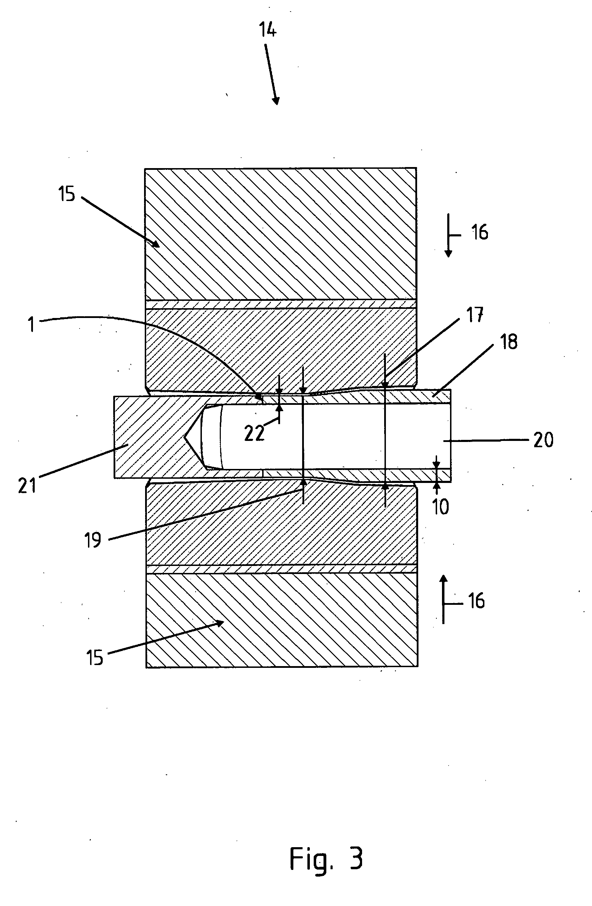

Figur 3 zeigt eine zweite Ausführungsvariante eines Knetwerkzeugs 15 zur Durchführung eines erfindungsgemäßen Knetvorgangs, wobei die Knetvorrichtung 14 wiederum zwei Knetwerkzeuge 15 aufweist, die eine Linearbewegung 16 aufeinander zu führend in pulsierenden Schritten ausführen. In die Knetvorrichtung 14 wird ein Ende 1 eines Rohrs 18 eingesetzt, wobei in das Rohr 18 ein Innendorn 20 eingeführt ist, der wiederum mit einem Gegenhalterdorn 21 formschlüssig gekoppelt ist, sodass das Ende 1 des Rohrs 18 an dem Gegenhaltedorn 21 zur Anlage kommt. Hierdurch ist es möglich, die Wandstärke 12 zu verringern, gegenüber einer ursprünglichen Wandstärke 10 des Rohrs 18. Ebenfalls wird der ursprüngliche Außendurchmesser 17 des Rohrs 18 durch den Knetvorgang zu einem Außendurchmesser 19 verringert.

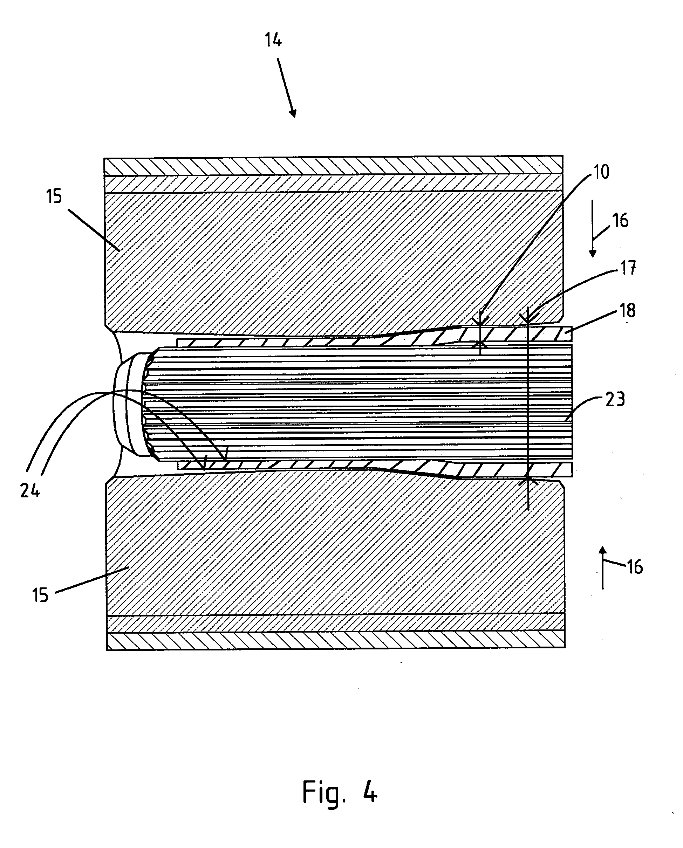

Figur 4 zeigt eine weitere Ausführungsvariante des erfindungsgemäßen Herstellungsverfahrens, wobei wiederum in einer Knetvorrichtung 14 zwei Knetwerkzeuge 15 derart angeordnet sind, dass sie eine pulsierende Linearbewegung 16 aufeinander zu ausführen. Hierzu wird ein Rohr 18 in der Knetvorrichtung 14 in seinem Außendurchmesser 17 und auch in seiner Wandstärke 10 verringert, wobei ein Innendorn mit profilierter Außenfläche in das Rohr 18 eingeführt ist und durch den Knetvorgang das Außenprofil des Innendorns 23 in eine Innenmantelfläche 24 des Rohrs 18 eingeknetet bzw. eingeprägt wird. Diesem Innendorn ist es möglich an die Innenmantelfläche der Aktuatorhülse bzw. des Anschlussflansches ein entsprechendes Profil anzuformen, so dass eine Innenverzahnung mit einem Aktuator mittels formschlüssiger Verbindung herstellbar ist. Auch kann an die Stirnfläche des Anschlussflansches oder der Aktuatorhülse eine entsprechende Profilierung angearbeitet werden, so dass diese ebenfalls formschlüssig mit einem Aktuator koppelbar sind.

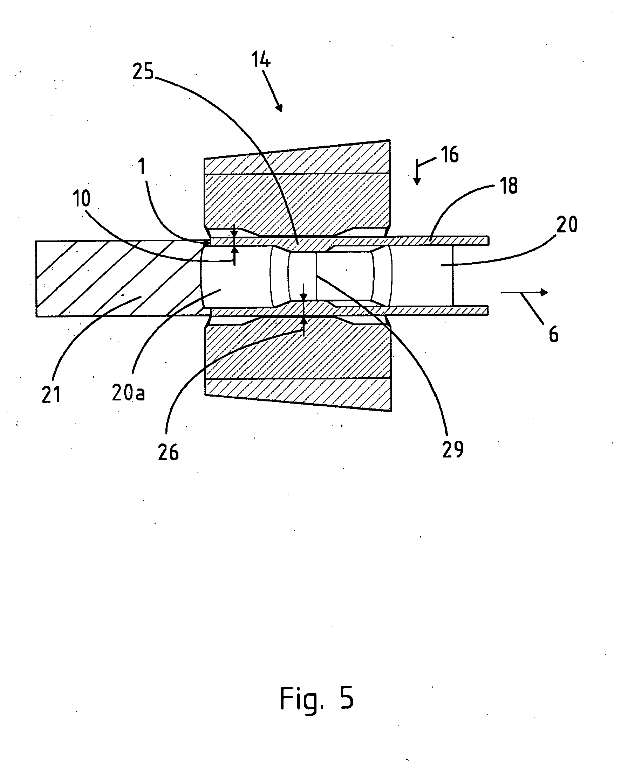

Figur 5 zeigt eine weitere Ausführungsvariante der vorliegenden Erfindung, wobei hier in einem Mittelabschnitt 25 des Rohrs 18 die Wandstärke 26 größer ausgebildet ist, als die Wandstärke 10 am Ende des Rohrs 18 bzw. die Wandstärke 10 in dem auf den Mittelabschnitt 25 in Längsrichtung des Rohrs 18 folgenden Längenabschnitt 7. Hierzu ist ein Innendorn 20 in das Rohr 18 eingeführt und am Ende 1 kommt ein Gegenhalterdorn 21 formschlüssig mit dem Rohr 18 zur Anlage. Der Innendorn weist ein Kopfstück 20a auf, wobei Kopfstück 20a und Innendorn 20 über eine Trennstelle 29 getrennt sind.

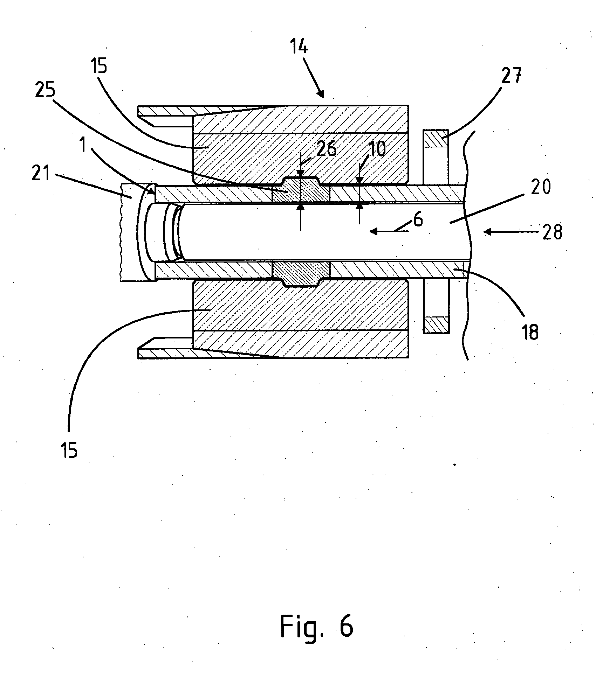

Figur 6 zeigt eine weitere Ausführungsvariante, wobei hier der Knetvorrichtung 14 eine Induktionsspule 27 vorgeschaltet ist und das Rohr 18 eine Einschubbewegung 28 erfährt, so dass es die Induktionsspule 27 passiert und erwärmt wird. Wiederum dargestellt ist ein in dem Rohr 18 platzierter Innendorn 20 sowie ein Gegenhalterdorn 21, der mit einem Ende 1 des Rohrs 18 formschlüssig zur Anlage kommt. Durch die gemäß Figur 6 eingesetzten Knetwerkzeuge 15 ist es möglich, einen Mittelabschnitt 25 des Rohrs 18 in seiner Wandstärke 10 aufzudicken. Hierdurch erfährt dieser Mittelabschnitt 25 eine größere Wandstärke 26, als die in Längsrichtung 6 des Rohres 18 übrigen Abschnitte aufweisen. Die Induktionsspule 27 ist im Rahmen der Erfindung jedoch auch bei jedem beliebigen anderen Aufweit- oder Stauchverfahren einsetzbar. Zur Entnahme wird das gedrehte Rohr mit den Werkzeughälften 15 entnommen.

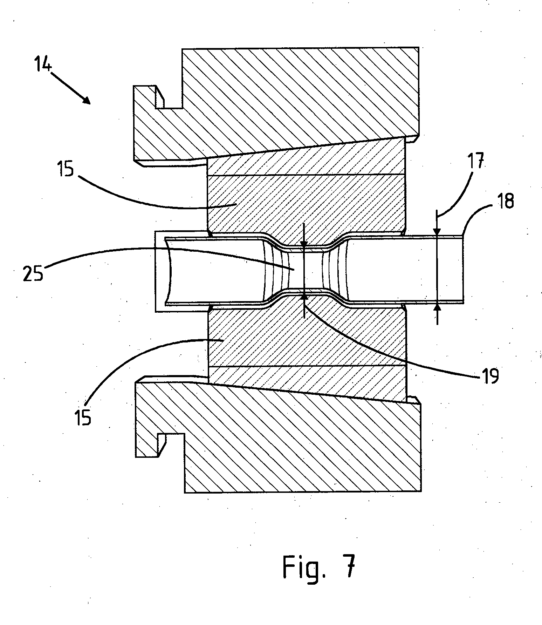

Figur 7 zeigt eine weitere Ausführungsvariante des erfindungsgemäßen Herstellungsverfahrens, wobei hier ein Mittelabschnitt 25 in seinem Außendurchmesser 19 gegenüber dem Außendurchmesser 17 des übrigen Rohrs 18 verringert ausgebildet ist. Auch hier wird das gedrehte Rohr mit den Werkzeughälften 15 entnommen.

### Bezugszeichen:

- 1 -: Ende
- 2 -: Rohrstabilisatorhälfte
- 3 -: Hülse
- 4 -: Innenraum zu 3
- 5 -: Übergangsabschnitt
- 6 -: Längsrichtung zu 2
- 7 -: Längenabschnitt
- 8 -: zweiter Übergangsabschnitt
- 9 -: zweiter Längenabschnitt
- 10 -: Wandstärke
- 11 -: Anschlussflansch
- 12 -: vergrößerte Wandstärke
- 13 -: Anschlussstutzen
- 14 -: Knetvorrichtung
- 15 -: Knetwerkzeug
- 16 -: Linearbewegung
- 17 -: ursprünglicher Außendurchmesser
- 18 -: Rohr
- 19 -: Außendurchmesser nach Knetvorgang
- 20 -: Innendorn
- 20a -: Kopfstück
- 21 -: Gegenhalterdorn
- 22 -: verringerte Wandstärke
- 23 -: Innendorn mit Außenprofil
- 24 -: Innenmantelfläche zu 18
- 25 -: Mittelabschnitt
- 26 -: Wandstärke zu 25
- 27 -: Induktionsspule
- 28 -: Einschubbewegung
- 29 -: Trennstelle

## Patentansprüche

1. Verfahren zur Herstellung einer Rohrstabilisatorhälfte (2) für einen aktiven oder semiaktiven Kraftfahrzeugstabilisator, wobei die Rohrstabilisatorhälfte (2) in Längsrichtung (6) mit voneinander verschiedenen Querschnittsgeometrien hergestellt wird, dadurch **gekennzeichnet, dass** ein Rohr (18) mit konstanter Querschnittsgeometrie zumindest abschnittsweise von außen in einer Knetvorrichtung (14) geknetet wird, wobei der Außendurchmesser (19) des Rohres (18) verringert wird und dass ein Anschlussflansch (11) oder eine Aktuatorhülse (3) einstückig und werkstoffeinheitlich an der Rohrstabilisatorhälfte (2) mit dem Knetvorgang angeformt wird.

2. Verfahren nach Anspruch 1, **dadurch gekennzeichnet, dass** bei dem Knetvorgang die Wandstärke (12) vergrößert wird.

3. Verfahren nach Anspruch 1 oder 2, **dadurch gekennzeichnet, dass** das Rohr (18) in Axialrichtung durch die Knetvorrichtung (14) mit einem Vorschub geschoben wird und die Vorschubgeschwindigkeit veränderbar ist.

4. Verfahren nach einem der Ansprüche 1 oder 2, **dadurch gekennzeichnet, dass** der Abschnitt, der geknetet wird vor dem Knetvorgang durch eine der Knetvorrichtung (14) unmittelbar vorgeschaltete Induktionsspule erwärmt wird.

5. Verfahren nach einem der vorhergehenden Ansprüche, **dadurch gekennzeichnet, dass** ein Endabschnitt des Rohres (18) in die Knetvorrichtung (14) eingelegt wird und im Ursprungszustand belassen wird und der Knetvorgang nach Passieren des Endabschnittes des Rohres (18) an einem Innenabschnitt beginnt.

6. Verfahren nach einem der vorhergehenden Ansprüche, **dadurch gekennzeichnet, dass** die geknetete Rohrstabilisatorhälfte (2) gegenüber ihrer Mittellängsachse umgeformt wird.

7. Verfahren nach einem der vorhergehenden Ansprüche, **dadurch gekennzeichnet, dass** ein Innendorn (20) in das Rohr (18) während des Umformvorganges eingeführt wird, wobei der Innendorn (20) ein Außenprofil besitzt, das sich durch den Knetvorgang in die Rohrinnenmantelfläche einprägt.

8. Verfahren nach einem der vorhergehenden Ansprüche, **dadurch** gekennzeichnet, **dass** das Rohr (18) durch den Knetvorgang von einer runden Ausgangsgeometrie zumindest abschnittsweise mit einer elliptischen, mehreckigen und/oder rechteckigen Querschnittsgeometrie ausgebildet wird.

9. Verfahren nach einem der Ansprüche 1 oder 3 bis 8, dadurch **gekennzeichnet, dass** durch einen Innendorn (20) und einen Gegenhalterdorn (21) die Wandstärke (10) durch den Knetvorgang reduziert wird.

10. Verfahren nach einem der vorhergehenden Ansprüche, **dadurch** gekennzeichnet, dass die Rohrstabilisatorhälfte (2) nach dem Knetvorgang und/oder nach dem anschließenden Umformvorgang zumindest partiell gehärtet und/oder vergütet wird.

## Claims

1. Method for producing a tubular stabiliser half (2) for an active or semiactive motor-vehicle stabiliser, the tubular stabiliser half (2) being produced with different cross-sectional geometries in the longitudinal direction (6), **characterised in that** a tube (18) having a constant cross-sectional geometry is swaged at least in portions from the outside in a swaging device (14), thereby reducing the outer diameter (19) of the tube (18), and **in that** a connection flange (11) or an actuator sleeve (3) is formed on the tubular stabiliser half (2)in an integral manner and from the same material by means of the swaging process.

2. Method according to claim 1, **characterised in that** the wall thickness (12) is increased in the swaging process.

3. Method according to either claim 1 or claim 2, **characterised in that** the tube (18) is pushed through the swaging device (14) in an axial direction with a feed movement, and the speed of the feed movement is variable.

4. Method according to either claim 1 or claim 2, **characterised in that** the portion of the tube which is swaged is heated prior to the swaging process by an induction coil which is arranged immediately upstream of the swaging device (14).

5. Method according to any of the preceding claims, **characterised in that** an end portion of the tube (18) is inserted into the swaging device (14) and is kept in its original state, and, after passing the end portion of the tube (18), the swaging process begins at an inner portion.

6. Method according to any of the preceding claims, **characterised in that** the swaged tubular stabiliser half (2) is formed relative to the central longitudinal axis thereof.

7. Method according to any of the preceding claims, **characterised in** thatan inner mandrel (20) is introduced into the tube (18) during the forming process, the inner mandrel (20) having an outer profile which is embossed into the inner surface of the tube by the swaging process.

8. Method according to any of the preceding claims, **characterised in that** the tube (18) is formed, at least in portions, from a round starting geometry,to have an elliptical, polygonal and/or rectangular cross-sectional geometry by the swaging process.

9. Method according to any of claims 1 or 3 to 8, **characterised in that** the wall thickness (10) is reduced by the swaging process by means of an inner mandrel (20) and a counter holding mandrel (21).

10. Method according to any of the preceding claims, **characterised in that**, after the swaging process and/or after the subsequent forming process, the tubular stabiliser half (2) is hardened and/or tempered at least inpart.

## Revendications

1. Procédé de fabrication d'un demi-stabilisateur tubulaire (2) pour un stabilisateur actif ou semi- actif de véhicule automobile, dans lequel le demi-stabilisateur tubulaire (2) est fabriqué dans la direction longitudinale (6) avec des géométries de section transversale différentes les unes des autres, **caractérisé en ce qu'**un tube (18) de géométrie de section transversale constante est modelé de l'extérieur au moins par sections dans un dispositif de modelage (14), dans lequel le diamètre extérieur (19) du tube (18) est réduit, et une bride de raccordement (11) ou une douille d'actionnement (3) est formée d'un seul tenant et de façon unitaire au plan du matériau sur le demi- stabilisateur tubulaire (2) avec l'opération de modelage.

2. Procédé selon la revendication 1, **caractérisé en ce que** l'épaisseur de paroi (12) est renforcée dans l'opération de modelage.

3. Procédé selon la revendication 1 ou la revendication 2, **caractérisé en ce que** le tube (18) peut être poussé dans la direction axiale par le dispositif de modelage (14) avec un déplacement en avant et la vitesse de déplacement en avant peut être modifiée.

4. Procédé selon l'une quelconque des revendications 1 ou 2, **caractérisé en ce que** la section qui est modelée est chauffée avant l'opération de modelage par une bobine à induction directement aménagée en amont du dispositif de modelage (14).

5. Procédé selon l'une quelconque des revendications précédentes, **caractérisé en ce que** la section d'extrémité du tube (18) est insérée dans le dispositif de modelage (14) et laissée à l'état initial, l'opération de modelage démarrant après passage de la section d'extrémité du tube (18) dans une section interne.

6. Procédé selon l'une quelconque des revendications précédentes, **caractérisé en ce que** le demi-stabilisateur modelé (2) est façonné par rapport à son axe longitudinal central.

7. Procédé selon l'une quelconque des revendications précédentes, **caractérisé en ce qu'**un mandrin interne (20) est inséré dans le tube (18) au cours de l'opération de façonnage, dans lequel le mandrin interne (20) possède un profil externe qui s'imprime dans la surface de chemisage interne du tube lors de l'opération de modelage.

8. Procédé selon l'une quelconque des revendications précédentes, **caractérisé en ce que** le tube (18) passe au moins par sections, lors de l'opération de modelage, d'une géométrie de départ rondeà une géométrie de section transversale elliptique, polygonale et/ou rectangulaire.

9. Procédé selon l'une quelconque des revendications 1 ou 3 à 8, **caractérisé en ce que** l'épaisseur de paroi (10) est réduite dans l'opération de modelage par l'action d'un mandrin interne (20) et d'un contre-mandrin (21).

10. Procédé selon l'une quelconque des revendications précédentes, **caractérisé en ce que** le demi-stabilisateur tubulaire (2) est durci et/ou densifié au moins en partie après l'opération de modelage et/ou après l'opération de façonnage qui suit.
